# EUROPÄISCHE PATENTSCHRIFT

(11) **EP 2 747 973 B1**
(45) Veröffentlichungstag und Bekanntmachung des Hinweises auf die Patenterteilung: **24.01.2018**
(21) Anmeldenummer: 12766275.7
(22) Anmeldetag: 22.08.2012
(51) Int. Cl.: B29C 35/08, B32B 19/02, B32B 27/08, F16L 55/165

(54) **EINLEGESCHLAUCH ZUR KANALSANIERUNG**
LINER HOSE FOR SEWERS REHABILITATION
GAINE A DOUBLURE POUR LA RÉNOVATION DES ÉGOUTS

(30) Priorität: 25.08.2011 DE 102011111172
(43) Veröffentlichungstag der Anmeldung: 02.07.2014
(73) Patentinhaber: Stark, Kurt, 91284 Neuhaus (DE)
(72) Erfinder: Stark, Kurt, 91284 Neuhaus a.d. Pegnitz (DE); Hummel, Henrik, 04229 Leipzig (DE)
(74) Vertreter: Schlief, Thomas P.
(86) Internationale Anmeldenummer: PCT/EP2012/003546
(87) Internationale Veröffentlichungsnummer: WO 2013/026568

(56) Entgegenhaltungen:
- EP-A1- 1 262 708
- EP-A2- 0 155 406
- WO-A1-2011/000111
- WO-A1-2011/157356
- DE-A1-102007 061 307
- DE-A1-102009 041 841
- DE-U1- 29 700 236
- Pfaff, Gerhard; Franz, Klaus-Dieter; Emmert, Ralf; Nitta, Katsuhisa; Besold, Robert: "Pigments, Inorganic, 6. Luster Pigments" In: "Ullmann's Encyclopedia of Industrial Chemistry", 15. Oktober 2009 (2009-10-15), Wiley-VCH Verlag GmbH & Co. KGaA, Weinheim, XP002686446, Bd. 27, Seiten 359-373, Abschnitt "3. Metal Effect Pigments"; Seite 369 - Seite 371

## Beschreibung

Die vorliegende Erfindung betrifft einen Einlegeschlauch, geeignet zum Auskleiden von unterirdischen Rohren und Kanälen, der aus einer schlauchförmigen innenliegenden ein- oder mehrschichtigen, flüssigkeitsdichten und zur Aushärtung des Trägermaterials zumindest 80% der UV-Strahlung im Wellenlängenbereich von 200-400 nm durchlassenden Kunststofffolie und einer außenliegenden, schlauchförmigen, mehrschichtigen Kunststofffolie und einer zwischen den beiden schlauchförmigen Kunststofffolien angeordneten, mit einem reaktiven Kunststoffharz getränkten Trägermaterial besteht. Die Erfindung betrifft weiterhin die Verwendung des erfindungsgemäßen Einlegeschlauchs zur Sanierung von beschädigten, unterirdischen Rohren und Kanälen, vorzugsweise Abwasserkanälen, mit Hilfe der Schlauchliner-Technik.

Aus dem Stand der Technik ist bereits bekannt, zur Sanierung von unterirdischen Rohren einen flexiblen Einlegeschlauch zu verwenden. Ein solcher Einlegeschlauch umfasst üblicherweise zwei Schläuche, einen innenliegenden Schlauch und einen außenliegenden Schlauch, mit unterschiedlichem Durchmesser, zwischen denen ein Trägermaterial eingebracht ist, das vorzugsweise mit einem reaktiven Kunststoffharz getränkt ist. Nach dem Einbringen des Einlegeschlauchs in das zu sanierende Rohr, das meist unter der Erde liegt, und dem Aufblasen des Einlegeschlauchs bis auf den Durchmesser des Rohres, damit er mit dem Außenschlauch an der Rohrwand anliegt, wird das Kunststoffharz zwischen den beiden Schläuchen ausgehärtet. Dadurch erhält man ein stabiles Rohr an der so sanierten Innenwand des Rohres nach Entfernen des Innenschlauchs. Die Aushärtung wird vorzugsweise durch Bestrahlung mit UV-Strahlung erreicht, indem eine UV-Strahlung und ggf. kurzwelliges, sichtbares Licht aussendende, vorzugsweise bewegliche Quelle, besonders bevorzugt ein UV-Strahler, in den aufgeblasenen Einlegeschlauch eingebracht und zum Aushärten des mit einem reaktiven Kunststoffharz getränkten Trägermaterials durch den aufgeblasenen Einlegeschlauch hindurch gezogen wird. Das ausgehärtete Trägermaterial bildet nach Ab- bzw. Herausziehen des innenliegenden Schlauches das sanierte Rohr.

Es versteht sich von selbst, das nicht nur an die außenliegende Schlauchfolie des Einlegeschlauchs hinsichtlich einer Verhinderung einer vorzeitigen Aushärtung des mit reaktivem Kunststoffharz getränkten Trägermaterials bei Lagerung und Handhabung vor der direkten Verwendung in unterirdischen Rohren besondere Anforderungen gestellt werden, sondern auch an die Verarbeitung des Einlegeschlauchs, damit das mit reaktivem Kunststoffharz getränkte Trägermaterial möglichst rasch, aber trotzdem durchgehend homogen bei der Behandlung mit der UV-Strahlung ausgehärtet wird. Üblicherweise sind dafür verhältnismäßig lange Zeiten erforderlich, um ein vollständiges Aushärten des relativ dicken, mit einem reaktiven Kunststoffharz getränkten Trägermaterials zu erreichen. Dementsprechend kann die UV-Strahlungsquelle nur relativ langsam durch das Innere des aufgeblasenen Einlegeschlauchs gezogen werden, damit bei der von innen nach außen hin zu erfolgenden Aushärtung auch die Aushärtung des äußeren Bereichs, d. h. des näher an der zu sanierenden Rohrwand liegenden Bereichs, des Trägermaterials gewährleistet ist.

Es hat daher nicht an Versuchen gefehlt, die Aushärtzeit zu verkürzen. So wird in DE 297 00 236 U1 empfohlen, den Faserschlauch, der bei der Sanierung ausgehärtet wird, mit einer außenliegenden Hülle, die metallisch beschichtet ist oder aus einer Metallfolie besteht, die schraubenförmig um das Fasermaterial, d.h. den Faserschlauch gewickelt ist, zu umhüllen. Bei dieser Art Hülle ist ein undefiniertes Reißen der außenliegenden Metallbeschichtung bzw. der Metallfolie beim Aufblasen des Einlegeschlauchs im zu sanierenden Rohr nur dann zu vermeiden, wenn die Hülle bereits im nicht aufgeblasenen Zustand keine zusammenhängenden Metallflächen aufweist, d. h. die Metallflächen voneinander getrennt sind. Diese Metallflächen ergeben im aufgeblasenen Zustand des Einlegeschlauchs dann in Längsrichtung nur Metallstreifen, so dass von den ggf. dazwischen liegenden, metallfreien Flächen keine Reflexion der UV-Strahlung und damit keine homogene Aushärtung durch eine solche partielle Außenhülle des Einlegeschlauchs erzielt werden kann. Darüber hinaus besteht die nicht unerhebliche Gefahr, dass bei der Lagerung und Handhabung des Einlegeschlauchs durch Verschiebung solcher nicht zusammenhängenden Metallflächen Bereiche des auszuhärtenden Trägermaterials freigelegt werden, und damit keine Bedeckung mit reflektierenden Metallflächen aufweisen, wodurch UV-Strahlung und kurzwelliges sichtbares Licht von außen (d.h. bei Tageslicht) in diese Bereiche des mit reaktivem Kunststoffharz getränkten Trägermaterials eindringen und damit zu einer vorzeitigen, unerwünschten Aushärtung führen können.

Die DE 10 2009 041 841 A1 offenbart eine kontakttransparente, d.h. nicht blickdichte, UV-Strahlung und kurzwelliges, sichtbares Licht absorbierende und/oder reflektierende, einschichtige oder mehrschichtige Folie zur Verwendung als Außenfolie eines Einlegeschlauches. Die Folie umfasst zumindest eine Schicht basierend auf wenigstens einem gegebenenfalls modifizierten thermoplastischen Olefin-Homo- oder Copolymeren, wobei die Schicht eine Kombination aus wenigstens einem kurzwelliges sichtbares Licht absorbierenden und/oder reflektierenden organischen oder anorganischen Farbpigment oder Farbstoff, und aus wenigstens einer die UV-Strahlung absorbierenden und/oder reflektierenden, organischen oder anorganischen Verbindung enthält. Die Kontakttransparenz hat zum Ziel, zur Kontrolle einer gleichmäßigen Harztränkung ein Hindurchschauen durch die Folie zu ermöglichen.

Auch die WO 2011/157356 A1 beschreibt einen Folienschlauch mit einem kontakttransparenten Außenschlauch, der entsprechend der Außenfolie gemäß der DE 10 2009 041 841 A1 aufgebaut ist.

Aufgabe der vorliegenden Erfindung war es daher, die Rohrsanierung mit Hilfe eines Einlegeschlauches dahingehend zu verbessern, dass das erhaltene, sanierte Rohr möglichst homogene Eigenschaften trotz einer Erhöhung der Sanierungsgeschwindigkeit aufweist.
Diese Aufgabe wird durch einen Einlegeschlauch mit den Merkmalen des Anspruchs 1 gelöst.

Unter dem Begriff "UV-Strahlung" wird im Sinne der vorliegenden Erfindung eine elektromagnetische Strahlung in einem Wellenlängenbereich von 200-400 nm verstanden.

Unter dem Begriff "kurzwelliges, sichtbares Licht" wird im Sinne der vorliegenden Erfindung eine elektromagnetische Strahlung in einem Wellenbereich von 400-500 nm, vorzugsweise von 400-450 nm, verstanden.

Unter dem Begriff "basierend auf" wird im Sine der Erfindung "bestehend aus" verstanden, soweit sich dieser Begriff auf die jeweilige Polymerkomponente bezieht.

Der erfindungsgemäße Einlegeschlauch hat den großen Vorteil, dass er aufgrund seines Aufbaus nicht nur Schutz gegen eine von außen einwirkende UV-Strahlung und ggf. gegen das von außen einwirkende kurzwellige, sichtbare Licht bietet, wodurch nicht nur ein vorzeitiges Aushärten des insbesondere durch UV-Strahlung aushärtbaren Trägermaterials verhindert wird, sondern auch darüber hinaus bei dem eigentlichen Sanierungsprozess eine gleichmäßige, homogene Aushärtung in allen Bereichen über die gesamte Dicke des Trägermaterials gewährleistet, wodurch die Herstellung eines Sanierungsrohres mit homogenen Eigenschaften gewährleistet wird.

Dies wird insbesondere durch den erfindungsgemäßen Aufbau der außenliegenden schlauchförmigen mehrschichtigen Kunststofffolie (2) erzielt.

In einer bevorzugten Ausführungsform kann die Schichtfolge (b) - (e) noch mit einer Schicht (a) gemäß Anspruch 1 ausgerüstet sein.

Die mehrschichtige Kunststofffolie (2) kann demgemäß ggf. eine gefärbte Schicht (a) aufweisen, die als äußerste Schicht des erfindungsgemäßen Einlegeschlauchs vorliegt. Sofern diese Schicht vorhanden ist, ist sie eingefärbt, vorzugsweise transparent, und dient vorzugsweise zur Identifikation des Sanierungsrohres, insbesondere nach der Sanierung bei ggf. später auftretenden Störungsfällen. Dementsprechend streben die Sanierungsunternehmen, die auf dem Gebiet der Rohrsanierung, insbesondere der Kanalrohrsanierung, mit Hilfe der Schlauchliner-Technik tätig sind, zumindest eine unterschiedliche Färbung der Schicht (a) in z.B. gelb, orange oder blau an, um so eine unterscheidbare Markierung jeweils nach Hersteller zu erreichen.

Sofern eine eingefärbte Schicht (a) vorliegt, enthält die Schicht zur Farbgebung vorzugsweise wenigstens ein organisches oder anorganisches Farbpigment oder wenigstens einen organischen oder anorganischen Farbstoff ausgewählt aus der Gruppe umfassend Carbonyl-Farbstoffe, vorzugsweise Chinon-Farbstoffe, Indigo-Farbstoffe und Chinacridone, Azo-Verbindungen, Cyanin-Verbindungen, vorzugsweise Triphenylmethan-Verbindungen, Azomethine, Iso-indoline, Dioxazine, Metalloxide, Übergangsmetalloxide, Metalloxidhydrate, Übergangsmetalloxidhydrate und Metallsulfide, vorzugsweise mit Ausnahme von organischen und anorganischen, silbrigfarbigen Farbpigmenten oder Farbstoffen.

Unter dem Begriff "silberfarbiges Farbpigment bzw. silberfarbiger Farbstoff" wird erfindungsgemäß ein Farbpigment bzw. Farbstoff verstanden, der das Substrat (die Schicht) silbrigfarbig einfärbt.

Vorzugsweise werden je nach gewünschter Farbgebung des Herstellers ein organisches Farbpigment oder ein Farbstoff ausgewählt aus der Gruppe umfassend Benzimidazol-Derivate, Benzotriazol-Derivate, 1,4-Chinon-Derivate, 1,4-Naphthochinon-Derivate, 9,10-Anthrachinon-Derivate, Phenylazophenol-Derivate, jeweils in Form der freien Verbindungen, in Form von Tautomeren oder der Salze von Säuren oder Basen oder der Solvate, vorzugsweise der Hydrate eingesetzt. Vorzugsweise liegt ein entsprechendes anorganisches Farbpigment oder ein entsprechender anorganischer Farbstoff ausgewählt aus der Gruppe umfassend Übergangsmetalloxide und Übergangsmetalloxidhydrate vor. Besonders bevorzugt wird zur Identifizierung ein Farbpigment oder ein Farbstoff ausgewählt aus der Gruppe umfassend 4-Phenylazophenol, 2-(2'- Methyl)phenylazo-4-methylphenol, N-(4- Phenylazo)phenyldiethanolamin, Benzotriazole, Benzimidazolon, Eisenoxid und Eisenoxidhydrat, ganz besonders bevorzugt Benzimidazolon eingesetzt.

Vorzugsweise enthält die erfindungsgemäß zum Einsatz kommende schlauchförmige mehrschichtige Kunststofffolie (2) 0,05-30 Gew.-%, besonders bevorzugt 0,1-10 Gew. %, bezogen auf das Gesamtgewicht der Schicht (a) des organischen oder anorganischen Farbpigments oder Farbstoffs. Vorzugsweise ist das zum Einsatz kommende Farbpigment oder der Farbstoff bis zu 300°C stabil.

Sofern die Schicht (a) vorliegt, kann sie als Oberflächenschicht der mehrschichtigen Kunststofffolie (2) siegelfähig sein und basiert auf einem thermoplastischen Olefin-Homo- oder Copolymer.

Vorzugsweise können zur Herstellung der Schicht (a) der erfindungsgemäß zum Einsatz kommenden Kunststofffolie (2) thermoplastische Olefin-Homo-oder Copolymere, vorzugsweise von a,β-ungesättigten Olefinen mit 2-10 Kohlenstoffatomen, eingesetzt werden. Geeignete Olefin-Homopolymere sind vorzugsweise ausgewählt aus der Gruppe umfassend Ethylen-Homopolymere (Polyethylene, PE), vorzugsweise LDPE und HDPE, Propylen-Homopolymere (Polypropylene, PP), Butylen-Homopolymere (Polybutylene, PB), Isobutylen-Homopolymere (Polyisobutylene, Pl) und Mischungen aus wenigstens zwei der genannten Polymere. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann. Geeignete Olefin-Copolymere sind vorzugsweise Copolymere von Ethylen und/oder Propylen und wenigstens einem α-Olefin mit mindestens 4, vorzugsweise mit 4-10, besonders bevorzugt mit 4-8 Kohlenstoffatomen, ganz besonders bevorzugt Copolymere von Ethylen und/oder Propylen mit wenigstens einem α-Olefin ausgewählt aus der Gruppe umfassend Buten, Hexen und Octen. Der Anteil dieser α-Olefine im Olefin-Copolymeren beträgt vorzugsweise höchstens 25 Gew.-%, besonders bevorzugt höchstens 15 Gew.-%, jeweils bezogen auf das Gesamtgewicht des Olefin-Copolymeren. Besonders geeignete Copolymere von Ethylen und wenigstens einem α-Olefin mit mindestens 4 Kohlenstoffatomen sind LLDPE und/oder mPE. Mit "LLDPE" werden lineare Ethylen-Copolymere niedriger Dichte bezeichnet, welche durch das Vorhandensein einer linearen Hauptkette mit daran befindlichen Seitenketten gekennzeichnet sind und eine Dichte im Bereich von 0,86 und 0,94 g/cm³ aufweisen. Mit "mPE" werden Ethylen-Copolymere bezeichnet, die mittels Metallocen-Katalysatoren polymerisiert wurden und vorzugsweise eine Dichte im Bereich von 0,88 und 0,93 g/cm³ aufweisen. Bevorzugte Olefin-Homo-oder Copolymere zur Herstellung der Schicht (a) sind Ethylen-Homo- oder Copolymere und/oder Propylen-Homo- oder Copolymere. Besonders bevorzugt zur Herstellung der Schicht (a) ist eine Mischung aus wenigstens einem Ethylen-Homopolymer wie LDPE und wenigstens einem Ethylen-Copolymer wie LLDPE und/oder mPE.

Das thermoplastische Olefin-Homo-oder Copolymer der Schicht (a) der erfindungsgemäßen Mehrschichtfolie weist eine VICAT Erweichungstemperatur von wenigstens 95°C auf. Die VICAT Erweichungstemperatur (VST A/120) wird gemäß DIN EN ISO 306 / ASTM D1525 bestimmt.

Die Schicht (a) der erfindungsgemäßen Mehrschichtfolie weist vorzugsweise eine Schichtdicke von 3 µm bis 100 µm, besonders bevorzugt von 10 µm bis 40 µm auf.

Die erfindungsgemäß zum Einsatz kommende, außenliegende, schlauchförmige Kunststofffolie (2) weist in der undurchsichtigen Schichtfolge eine undurchsichtige Schicht (b) auf. Schicht (b) kann heißsiegelfähig sein, sofern keine Schicht (a) vorliegt. Diese Schicht (b) basiert auf einem thermoplastischen Olefin-Homo- oder Copolymeren, das ggf. modifiziert sein kann.

Als thermoplastische Olefin-Homo- oder Copolymere kommen die vorstehend zur Herstellung der Schicht (a) aufgeführten thermoplastischen Polymeren in Frage.

Die Schicht (a) und die Schicht (b) können auf derselben oder einer unterschiedlichen Art von thermoplastischen Olefin-Homo- oder Copolymeren basieren.

Sofern keine Schicht (a) vorzugsweise zur Identifikation des erfindungsgemäßen Einlegeschlauches erforderlich ist, kann die Schicht (b) die äußerste Schicht des erfindungsgemäßen Einlegeschlauches sein.

Unabhängig davon kann die Schicht (b) auf einem modifizierten Olefin-Homo- oder Copolymeren basieren, sofern die Schicht auch als Haftvermittlerschicht zu einer in der erfindungsgemäß zum Einsatz kommenden Kunststofffolie (2) vorliegenden Barriereschicht dient.

Sofern die Schicht (b) auch als Haftvermittlerschicht dient, kann sie, wie die Schicht (d), gleich oder verschieden voneinander, auf wenigstens einem modifizierten thermoplastischen Polymeren, vorzugsweise auf wenigstens einem modifizierten Olefin-Homo- oder Copolymeren basieren. Als Olefin-Homo- oder Copolymere können dieselben Olefin-Homo- oder Copolymere eingesetzt werden, die auch zur Herstellung der Schicht (a) geeignet sind, nur dass diese Polymere modifiziert sind. Besonders bevorzugt basieren solche Haftvermittlerschichten, jeweils unabhängig voneinander, auf wenigstens einem modifizierten Ethylen-Homo- oder Copolymeren und/oder wenigstens einem modifizierten Propylen-Homo- oder Copolymeren, welches mit wenigstens einer organischen Säure oder wenigstens einem vorzugsweise cyclischen organischen Säureanhydrid, vorzugsweise mit Maleinsäureanhydrid, modifiziert ist.

Die Schichten (a) und (b) der erfindungsgemäß zum Einsatz kommenden Mehrschichtfolie (2) weisen vorzugsweise, jeweils unabhängig voneinander, eine Schichtdicke von 3 µm bis 100 µm, besonders bevorzugt von 3 µm bis 40 µm, auf.

Die Schicht (b) hat hauptsächlich die Funktion, eine von außen einwirkende UV-Strahlung und ein von außen einwirkendes, kurzwelliges Licht zu absorbieren und/oder zu reflektieren. Für diese Funktion enthält die Schicht (b) wenigstens eine die UV-Strahlung und kurzwelliges, sichtbares Licht absorbierende und/oder reflektierende organische oder anorganische Substanz, vorzugsweise wenigstens eine Substanz ausgewählt aus der Gruppe umfassend organische oder anorganische Farbpigmente oder entsprechende Farbstoffe, organische und anorganische Verbindungen, Metalle und Metallverbindungen, mit Ausnahme von silbrigfarbigen Substanzen, die unter die vorstehende Definition betreffend "silbrigfarbig" fallen.

Die zur Einfärbung der Schicht (a) vorstehend aufgeführten organischen oder anorganischen Farbpigmente bzw. organische oder anorganische Farbstoffe, die insbesondere auch das kurzwellige, sichtbare Licht im Wellenbereich von 400-500 nm, besonders bevorzugt im Wellenbereich von 400-450 nm zu mehr als 90% absorbieren und/oder reflektieren, sind besonders gut geeignet, die Schicht (b) auszurüsten. Für diese Funktion ist die Schicht (b) aber weder mit einem Metall beschichtet, noch besteht sie aus einer Metallfolie.

Als organische oder anorganische Verbindung zum Absorbieren und/oder Reflektieren der von außen eindringenden UV-Strahlung und ggf. des von außen eindringende, kurzwellige, sichtbare Lichts zu mehr als 90% enthält die Schicht (b) möglichst homogen verteilt wenigstens eine organische oder anorganische Verbindung ausgewählt aus der Gruppe umfassend Metalloxide, Übergangsmetalloxide, Metalloxidhydrate, Übergangsmetalloxidhydrate, Phosphite, Benzophenone, Anthranilate, Salicylate, Dibenzoylmethane-Derivate, p-Aminobenzosäure-Derivate, Zimtsäure-Derivate (Phenylacrylsäure -Derivate), Benzimidazol-Derivate, Benzotriazol-Derivate, Cyanoacrylate, Benzotriazol-Derivate, β-β'-Divinylacrylate, Alkyl-α-cyano-β-β'-divinylacrylate, 1,3,5-Triazin-Verbindungen und sterisch gehinderte Amine, jeweils in Form der freien Verbindungen, in Form ihrer Tautomeren oder jeweils ihrer Salze von Säuren oder Basen. Derartige Verbindungen sind teilweise marktgeführte Produkte, wie z. B. Uvinule® der BASF AG.

Unter dem Begriff "sterisch gehinderte Amine" werden erfindungsgemäß Verbindungen verstanden, bei denen an wenigstens ein dreibindiges Stickstoffatom ein oder mehrere raumfüllende, organische Reste gebunden sind. Vorzugsweise handelt es sich um aromatische oder aliphatische, acyklische oder cyklische, sekundäre und tertiäre Amine wie N,N'-disubstituierte p-Phenylendiamine oder substituierte (Amino)-Piperidine.

Besonders bevorzugt werden als UV-Strahlung und ggf. das kurzwellige, sichtbare Licht absorbierende und/oder reflektierende, organische oder anorganische Verbindungen wenigstens eine Verbindung aus der Gruppe umfassend Zinkoxid, Titandioxid, 2-Ethoxy-ethyl-p-methoxycinnamat, Diethanolamin-p-methoxycinnamat, Octyl-p-methoxycinnamat, 2-Ethylhexyl-2-cyano-3,3-diphenylacrylat, Kaliumcinnamat, Propyl-4-methoxy-cinnamat, Amyl-4-methoxycinnamat, α-Cyano-4-methoxyzimtsäure bzw. der entsprechende Hexylester, Cyclohexyl-4-methoxycinnamat, Glyceryl-p-amino-benzoat, Amyl-p-dimethylaminobenzoat, Ethyl-4-bis(hydroxypropyl)-aminobenzoat, Octyl-p-dimethylaminobenzoat, Ethoxylierte-4-Aminobenzosäure, Octylsalicylat, Triethanolaminsalicylat, Salze der Salicylsäure, 4-Isopropylbenzylsalicylat, 2-Ethylhexyl-2-(4-phenylbenzoyl)benzoat, Homomenthylsalicylat, , 2-Hydroxy-4-methoxybenzophenon, 2,4,6-Trianilino-(p-carbo-2-ethylhexyloxy)-1,3,5-triazin, 2-Phenylbenzimidazol-5-sulfonsäure, 1-(4-tert-Butylphenyl)-3-(4-methoxyphenyl)propan-1,3-dion, p-Cumenyl-3-phenylpropan-1,3-dion, 1,3-Bis(4-Methoxyphenyl)propan-1,3-dion, Menthylanthranilat, Homomenthyl-N-acetylanthranilat, 2-Hydroxy-4-octylbenzophenon (Uvinul® 3008, Uvinul® 3008 FL), 6-*tert*-Butyl-2-(5-chlor-2H-benzotriazol-2-yl)-4-methylphenol (Uvinul® 3026, Uvinul® 3026 GR), 2,4-Di-*tert*-butyl-6-(5-chlor-2H-benzotriazol-2-yl)-phenol (Uvinul® 3027), 2-(2H-Benzotriazol-2-yl)-4,6-di-*tert*-pentylphenol (Uvinul® 3028, Uvinul® 3028 GR), 2-(2H-Benzotriazol-2-yl)-4-(1,1,3,3-tetramethylbutyl)-phenol (Uvinul® 3029, Uvinul® 3029 GR), 1,3-Bis-[(2'-cyano-3',3'-diphenylacryloyl)oxy]-2,2-bis-{[(2'-cyano-3',3'-diphenylacryloyl)oxy]methyl}-propan (Uvinul® 3030, Uvinul® 3030 GR), 2-(2H-Benzotriazol-2-yl)-4-methylphenol (Uvinul® 3033 P), 2-(2H-Benzotriazol-2-yl)-4,6-bis(1-methyl-1-phenylethyl)phenol (Uvinul® 3034), Ethyl-2-cyano-3,3-diphenylacrylat (Uvinul® 3035), (2-Ethylhexyl)-2-cyano-3,3-diphenylacrylat (Uvinul® 3039), N,N'-Bisformyl-N,N'-bis-(2,2,6,6-tetramethyl-4-piperidinyl)-hexamethylendiamin (Uvinul® 4050 H), Bis-(2,2,6,6-tetramethyl-4-piperidyl)-sebacat (Uvinul® 4077 H, Uvinul® 4077 GR), Bis-(1,2,2,6,6-pentamethyl-4-piperidyl)-sebacat, Methyl-(1,2,2,6,6-pentamethyl-4-piperidyl)-sebacat (Uvinul® 4092 H), 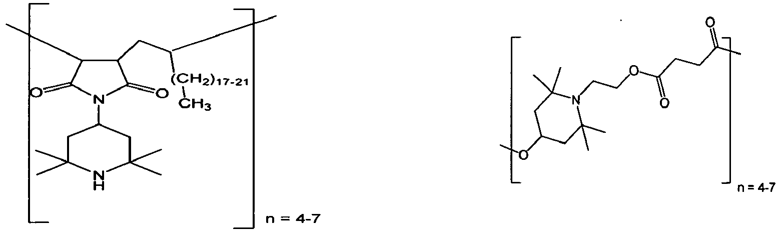 (Uvinul® 5050 H) und (Uvinul® 5062 H, Uvinul® 5062 GR) eingesetzt.

Vorzugsweise wird mindestens eine der genannten organischen und/oder anorganischen Verbindungen, die insbesondere die UV-Strahlung in einem Wellenlängenbereich von 200 bis 400 nm, besonders bevorzugt von 300 bis 400 nm, vorzugsweise zu mehr als 90 % absorbieren und/oder reflektieren, eingesetzt.

Vorzugsweise enthält die erfindungsgemäß zum Einsatz kommende Schicht (b) 0,05 bis 40 Gew.%, besonders bevorzugt 0,1 bis 10 Gew.%, ganz besonders bevorzugt 0,1 bis 3 Gew.%, jeweils bezogen auf das Gesamtgewicht der Schicht (b), von wenigstens einer vorzugsweise undurchsichtigen, organischen oder anorganischen Substanz, vorzugsweise von einer Kombination aus wenigstens einem Farbpigment oder Farbstoff und von wenigstens einer weiteren organischen oder anorganischen Verbindung. Vorzugsweise kann die Schicht (b) auch nur 0,05 bis 40 Gew.%, besonders bevorzugt 0,1 bis 10 Gew.%, bezogen auf das Gesamtgewicht der Schicht (b), vorzugsweise nur von einem organischen oder anorganischen Farbpigment oder Farbstoff enthalten. Vorzugsweise kann die Schicht (b) 0,05 bis 10 Gew.%, besonders bevorzugt 0,1 bis 3 Gew.%, bezogen auf das Gesamtgewicht der Schicht (b), eine der genannten organischen oder anorganischen Verbindungen enthalten. Vorzugsweise ist jede Substanz bei Temperaturen bis zu 300 °C stabil.

Bevorzugt enthält die Schicht (b) als die UV-Strahlung und ggf. das kurzwellige, sichtbare Licht absorbierende und/oder reflektierende organische oder anorganische Verbindung ein undurchsichtiges Farb-Pigment, besonders bevorzugt ein Mineral-Farbpigment, Metall-Farbpigment und/oder Kohlenstoff-Farbpigment, wie Kupferoxid, Eisenoxid oder ein schwarzfärbendes Farbpigment wie Anilinschwarz oder Ruß. Vorzugsweise sind silbrigfarbige, organische und anorganische Substanzen, wie Farbpigmente oder Farbstoffe, ausgenommen.

Die schlauchförmige Kunststofffolie (2) weist wenigstens eine Barriereschicht (c) besonders bevorzugt gegen Sauerstoff, Wasserdampf oder Öl auf.

Zur Herstellung der Barriereschicht (c) eignet sich bevorzugt wenigstens ein Homo-oder Copolyamid, Ethylen-Vinylalkohol-Copolymer (EVOH), Polyvinylalkohol (PVOH), zyklisches Olefin-Copolymer (COC), Polyvinylidenchlorid (PVdC) oder eine Mischung aus wenigstens zwei der genannten Polymere, besonders bevorzugt wenigstens ein Homo- oder Copolyamid.

Zur Herstellung der Schicht (c) der erfindungsgemäß zum Einsatz kommenden Mehrschichtfolie (2) eignet sich wenigstens ein Homo- und/oder Copolyamid.

Zur Herstellung der Schicht (c) sind vorzugsweise Homo- oder Copolyamide ausgewählt aus der Gruppe thermoplastische aliphatische, teilaromatische oder aromatische Homo-oder Copolyamide geeignet. Diese Homo-oder Copolymamide können aus Diaminen wie aliphatischen Diaminen mit 2-10 Kohlenstoffatomen, insbesondere Hexamethylendiamin und/oder aromatischen Diaminen mit 6-10 Kohlenstoffatomen, insbesondere p-Phenylendiamin und aus Dicarbonsäuren aliphatische oder aromatische Dicarbonsäuren mit 6-14 Kohlenstoffatomen wie z.B. Adipinsäure, Terephthalsäure oder Isoterephthalsäure hergestellt werden. Weiterhin können Homo- oder Copolyamide aus Lactamen mit 4-10 Kohlenstoffatomen wie z.B. aus ε-Caprotactam hergestellt werden. Erfindungsgemäß zum Einsatz kommende Polyamide sind vorzugsweise PA 6, PA 12, PA 66, PA 6I, PA 6T oder entsprechende Co-Polymere oder Mischungen aus wenigstens zwei der genannten Polyamide.

Die zur Herstellung der Barriereschicht (c) eingesetzten Polyvinylalkohole werden durch vollständige oder unvollständige Hydrolyse von entsprechenden Polyvinylacetaten (PVAc) gewonnen und umfassen somit sowohl teilverseifte Polyvinylacetate, die einen Verseifungsgrad von 50 bis 98 mol-% aufweisen, als auch vollverseifte Polyvinylacetate mit einem Verseifungsgrad ≥ 98 %.

Die zur Herstellung der Barriereschicht (c) eingesetzten Ethylen-Vinylalkohol-Copolymere (EVOH) werden durch vollständige oder unvollständige Hydrolyse von entsprechenden ethylenhaltigen Polyvinylacetaten (EVAc) gewonnen und umfassen vor allem vollverseifte ethylenhaltige Polyvinylacetate mit einem Verseifungsgrad ≥ 98 %.

Die zur Herstellung der Barriereschicht (c) eingesetzten cyclischen Olefin-Copolymere (COC) können Copolymere von α,ß-ungesättigten cyclischen Olefinen mit 4-10 Kohlenstoffatomen wie z.B. Norbornen und thermoplastischen α,ß-ungesättigten Olefinen wie Ethylen oder Proplyen sein.

Die Schicht (c) der erfindungsgemäß zum Einsatz kommenden Mehrschichtfolie weist vorzugsweise eine Schichtdicke von 5 µm bis 100 µm, besonders bevorzugt von 10 µm bis 60 µm, auf.

Die Schicht (e) basiert auf wenigstens einem thermoplastischen Olefin-Homo- oder Copolymeren und enthält eine die UV-Strahlung nicht absorbierende, sondern im Wesentlichen nur reflektierende Substanz.

Als thermoplastische Olefin-Homo- oder Copolymere eignen sich die vorstehend zur Herstellung der Schicht (a) bzw. (b) aufgeführten Olefin-Homo- oder Copolymere. Die ggf. vorhandene Schicht (a), die Schicht (b), die Schicht (d) und die Schicht (e) können aus derselben Art von Olefin-Homo- oder Copolymeren oder aus einer unterschiedlichen Art von Olefin-Homo- oder Copolymeren hergestellt werden. Dies gilt auch, sofern die Schichten (b) bzw. (d) modifiziert sind, um als Haftvermittlerschichten eingesetzt zu werden.

Die Schicht (e) enthält wenigstens eine die UV-Strahlung nicht absorbierende, sondern im Wesentlichen nur reflektierende Substanz, die vorzugsweise ausgewählt aus der Gruppe bestehend aus organischen Verbindungen, anorganischen Verbindungen, Metallen, Metalllegierungen, Mischungen von wenigstens zwei der genannten Verbindungen, Mischungen von wenigstens einer der genannten Verbindungen und einem Metall, mit Ausnahme von Substanzen, die silbrigfarbig im Sinne der vorstehenden Definition sind.

Die Schicht (e) weist außerdem weder eine Metallbeschichtung auf, noch besteht sie aus einer Metallfolie. Dies gilt auch für die außenliegende schlauchförmige Kunststofffolie (2) an sich.

Die Schicht (e) grenzt direkt an das getränkte, durch UV-Strahlung aushärtbare Trägermaterial des erfindungsgemäßen Einlegeschlauchs an.

Um ggf. noch eine Steigerung der Reflexion der UV-Strahlung durch die Schicht (e) in das angrenzende mit einem reaktiven Kunststoffharz getränkte Trägermaterial zu erreichen, kann die mehrschichtige Kunststofffolie (2) vorzugsweise deren Oberfläche, die direkt an das mit einem reaktiven Kunststoffharz getränkte Trägermaterial angrenzt, eine reflektierende Struktur aufweisen. Diese ist vorzugsweise geprägt. Vorzugsweise weist sie eine Prismen-, Facetten-, Waben- und/oder Pyramidenstruktur auf.

Die die UV-Strahlung reflektierende Substanz ist vorzugsweise in der Schicht (e) homogen verteilt und hat vorzugsweise eine durchschnittliche Partikelgröße von 0,08-5000 µm, vorzugsweise von 0,1-2000 µm, gemessen mit Hilfe der Streulichtintensität, vorzugsweise mit Hilfe von Laserstrahlen.

Als eine die UV-Strahlung reflektierende Substanz wird vorzugsweise wenigstens eine Substanz ausgewählt aus der Gruppe umfassend Metalle, Metalloxide, Übergangsmetalloxide, Metalloxidhydrate und Übergangsmetalloxidhydrate in vorzugsweise multipartikulärer Form, mit Ausnahme von Substanzen, die silbrigfarbig im Sinne der vorstehenden Definition sind.

Ganz besonders bevorzugt wird als UV-Strahlung reflektierendes Metall wenigstens ein Metall im multipartikulärer Form vorzugsweise Kupfer, Zink und/oder Zinn und/oder eine Metalllegierung vorzugsweise eine Kupfer/Zink- oder Kupfer/ZinnLegierung verwendet.

Weiterhin kann als UV-Strahlung reflektierende, anorganische Verbindung vorzugsweise wenigstens ein Weißpigment, besonders bevorzugt Titandioxid, Zinksulfid, Calziumkarbonat, Aluminiumoxid, Bariumsulfat, Silberchlorid oder ein entsprechendes UV-Strahlung reflektierendes anorganisches Salz, ganz besonders bevorzugt Titandioxid eingesetzt werden.

Weiterhin kann als UV-Strahlung reflektierende, anorganische Verbindung wenigstens eine Verbindung ausgewählt aus der Gruppe umfassend SiO₂, MgF₂, AI₂O₃, MgO, Nb₂O₅, ZrO₂, Ta₂O₅ CaPO₄, LaPO₄, YPO₄, MgAl₂O₄ und YBO₃ verwendet werden. Geeignete organische Weißpigmente auf Basis von Nephtalintetracarbonsäureimiden sind in DE 10 2007 061 307 A1 beschrieben, deren Offenbarung hiermit als Teil der vorliegenden Offenbarung gelten soll.

Weiterhin ist es möglich, Kombinationen von wenigstens einer der genannten die UV-Strahlung reflektierenden anorganischen Verbindungen, bzw. organischen Verbindungen und wenigstens einem Metall, wenigstens einer Metalllegierung und/oder wenigstens einer Metallverbindung unter Berücksichtigung der vorstehenden Ausnahme betreffend silbrigfarbige Substanzen einzusetzen.

Vorzugsweise enthält die Schicht (e) 5-40 Gew.-%, besonders bevorzugt 10-25 Gew.-%, bezogen auf das Gesamtgewicht der Schicht (e), wenigstens einer der die UV-Strahlung reflektierenden Substanzen.

Vorzugsweise reflektiert die die UV-Strahlung reflektierende Substanz die UV-Strahlung in einem Wellenbereich von 200-400 nm zu wenigstens 40%.

Die erfindungsgemäß zum Einsatz kommende, schlauchförmige, mehrschichtige Kunststofffolie (2) kann vorzugsweise durch Extrusion, besonders bevorzugt durch (Co)-Extrusion, insbesondere durch Blasfolien-(Co)-Extrusion oder durch Cast-Extrusion hergestellt werden.

Wie bereits ausgeführt, wird zwischen den beiden Schlauchfolien (1) und (2) ein durch UV-Strahlung aushärtbares, imprägniertes Trägermaterial, vorzugsweise ein mit einem reaktiven, ungesättigten Harzsystem getränktes Trägermaterial, besonders bevorzugt ein mit einem reaktiven, ungesättigten Harzsystem getränktes Glasfasermaterial eingebracht. Das getränkte Trägermaterial kann als einschichtiges oder mehrschichtiges Rohr vorliegen, das durch UV-Strahlung ausgehärtet wird und nach der Aushärtung das Sanierungsrohr, vorzugsweise ein saniertes Kanalrohr, ergibt.

Der innenliegende Schlauch des erfindungsgemäßen Einlegeschlauchs, der zur Sanierung von unterirdischen Rohren verwendet wird, muss für UV-Strahlung durchlässig und flüssigkeitsdicht sein und relativ hohen mechanischen Anforderungen standhalten. Diese treten insbesondere beim Aufblasen des in das zu sanierende Rohr eingebrachten, erfindungsgemäßen Einlegeschlauchs und beim Abziehen von dem sanierten Rohr, das durch Aushärtung des mit einem reaktiven Harzsystem getränkten Trägermaterials erhalten wird.

Die Kunststofffolie (1) kann einschichtig sein, sofern sie die notwendigen guten mechanischen Eigenschaften, insbesondere eine sehr gute Dehnbarkeit, aufweist. Vorzugsweise ist sie mehrschichtig. Außerdem muss die Kunststofffolie die von einer UV-Quelle abgegebene UV-Strahlung, d.h. eine elektromagnetische Strahlung in einem Wellenbereich von 200-400 nm zumindest 80% besonders bevorzugt zumindest 90% durchlassen, damit die Aushärtung des mit einem reaktiven Harzsystem getränkten Trägermaterials durch die UV-Strahlung stattfinden kann.

Vorzugsweise ist die Kunststofffolie (1) eine Schlauchfolie, die durch (Co)-Extrusion vorzugsweise durch Blasfolien-(Co)-Extrusion hergestellt wurde und vorzugsweise keine Siegelnaht aufweist.

Vorzugsweise ist die innenliegende, für die UV-Strahlung durchlässige Kunststofffolie (1) eine mehrschichtige Folie in Form einer Schlauchfolie.

Diese innenliegende, schlauchförmige, mehrschichtige Kunststofffolie (1) umfasst
A) eine Schicht (A) basierend auf wenigstens einem Olefin-Homopolymeren oder Olefin-Copolymeren oder einer Mischung von wenigstens zwei der genannten Polymere oder auf wenigstens einem Homo- und/oder Copolyamid als die an das getränkte Trägermaterial direkt angrenzende Schicht,
C) ggf. eine jeweils über eine Haftvermittlerschicht (B) bzw. (D) verbundene Barriereschicht (C) und
E) eine außenliegende Schicht (E) als Oberflächenschicht basierend auf wenigstens einem Olefin-Homo- oder Copolymeren oder wenigstens einem Homo- und/oder Copolyamid als die zum Inneren des Einlegeschlauches gerichtete Außenschicht.

Die Dicke der Schicht (A) ist vorzugsweise 5-500 µm, besonders bevorzugt 20-400 µm, ganz besonders bevorzugt 20-150 µm.

Die Schicht (A) der innenliegenden schlauchförmigen Kunststofffolie (1) basiert vorzugsweise auf einem Olefin-Homo-Polymeren, Olefin-Copolymeren oder einer Mischung von Olefin - (Co)-Polymeren, die bereits vorstehend aufgeführt wurden. Besonders bevorzugt werden als thermoplastische Olefin-Homo- und/oder Copolymere Ethylen-Homo- oder Copolymere und/oder Propylen-Homo- oder Copolymere, besonders bevorzugt Ethylen-Homopolymere wie LDPE oder Ethylencopolymere wie LLDPE und/oder mPE eingesetzt.

Als Polyamide, die zur Herstellung der Schicht (A) bzw. der ggf. vorhandenen Barriereschicht (C) bzw. der Außenschicht (E) eingesetzt werden können, entsprechen den vorstehend aufgeführten Homo- oder Copolyamiden, die zur Herstellung der Barriereschicht (c) der Kunststofffolie (2) eingesetzt werden können. Vorzugsweise werden die Polyamide PA6, PA12, PA66, PA6I, PA6T oder entsprechende Copolymere oder Mischungen aus wenigstens zwei der genannten Polyamide eingesetzt.

Sofern die Schicht (A) aus einem Polyamid hergestellt wurde und eine Schicht (C) neben der außenliegenden Schicht (E) vorliegt, können diese Schichten einen identischen Schichtaufbau, besonders bevorzugt eine identische Schichtdicke und/oder identische Polyamidkomponenten und/oder eine identische Zusammensetzung aufweisen.

Ebenso ist es möglich, dass die Schicht (A) aus Polyamid, die Schicht (C) und die Schicht (E) einen unterschiedlichen Schichtaufbau, besonders bevorzugt eine unterschiedliche Schichtdicke und/oder unterschiedliche Polyamidkomponenten und/oder unterschiedlicher Zusammensetzung aufweisen.

Die ggf. vorhandene Schicht (C) bzw. die Schicht (E) der erfindungsgemäß zum Einsatz kommenden Mehrschichtfolie (1) weist vorzugsweise, jeweils unabhängig voneinander, eine Schichtdicke von 5-120 µm besonders bevorzugt von 10-60 µm auf.

Zur Herstellung der ggf. vorhandenen Haftvermittlerschichten (B) bzw. (D) der erfindungsgemäß zum Einsatz kommenden mehrschichtigen Kunststofffolie (1) können modifizierte thermoplastische Polymere, vorzugsweise modifizierte Olefin-Homo- oder Copolymeren wie die vorstehend aufgeführten thermoplastischen Polymeren, die zur Herstellung der Schicht (b) bzw. der Schicht (d) der mehrschichtigen Kunststofffolie (2) verwendet werden können, eingesetzt werden.

Die Haftvermittlerschichten (B) bzw. (D) weisen vorzugsweise, jeweils unabhängig voneinander, eine Schichtdicke von 1-30 µm besonders bevorzugt von 2-20 µm auf.

Sofern die zum Inneren des Einlegeschlauches gerichtete Außenschicht (E) der Kunststofffolie (1) auf wenigstens einem Olefin-Homo- oder Copolymeren basiert, so kann zur Herstellung dieser Schicht ein Olefin-Homo- und/oder Olefin-Copolymer, das zur Herstellung der Schicht (A) eingesetzt wird, verwendet werden.

Dabei kann die Schicht (A) einen identischen Schichtaufbau wie die Schicht (E) aufweisen, d.h. eine identische Schichtdicke und/oder identische Olefinkomponenten und/oder eine identische Zusammensetzung aufweisen.

Dabei können in einer weiteren bevorzugten Ausführungsform die Schichten (A) und (E) einen unterschiedlichen Schichtaufbau, bevorzugt eine unterschiedliche Schichtdicke und/oder unterschiedliche Polymerkomponenten und/oder eine unterschiedliche Zusammensetzung aufweisen.

Die Herstellung der mehrschichtigen Kunststofffolie (1) erfolgt vorzugsweise durch (Co)-Extrusion besonders bevorzugt durch Blasfolien-(Co)-Extrusion, wodurch bei dieser Herstellung bereits eine Schlauchfolie produziert wird.

Sofern die Herstellung der Kunststofffolie (1) durch Cast-Extrusion erfolgt, ist es notwendig, durch eine Versiegelung der Folie einen Schlauch herzustellen. Dabei sind besondere Anforderungen an die Versiegelung zu stellen, damit sie der entsprechenden Dehnung der Folie beim Aufblasen des zur Sanierung eingesetzten erfindungsgemäßen Einlegeschlauchs standhält.

Sowohl die Parameter zur Herstellung der außenliegenden mehrschichtigen Kunststofffolie (2) als auch die zur Herstellung der innenliegenden Kunststofffolie (1) des erfindungsgemäßen Einlegeschlauchs sind dem Fachmann bekannt.

Die innenliegende Kunststofffolie (1) kann ebenso wie die außenliegende Kunststofffolie (2) geprägt und/oder gereckt sein, wobei vorzugsweise sowohl die mehrschichtige Kunststofffolie (2), als auch die Kunststofffolie (1) nicht orientiert sind.

Die Kunststofffolie (1) ist auch vorzugsweise heißsiegelfähig.

Vorzugsweise ist es nicht notwendig, die innenliegende Kunststofffolie (1) vor dem Einsatz zu konditionieren.

Dies bedeutet, dass die vorstehend beschriebene Kunststofffolie (1) bereits ohne Konditionierung durch eine sehr gute Dehnbarkeit (bestimmt nach der nachstehend beschriebenen Methode) auszeichnet. Vorzugsweise weist die mehrschichtige Kunststofffolie (1) bereits im nicht konditionierten Zustand eine Dehnbarkeit von wenigstens 15%, besonders bevorzugt von wenigstens 18%, ganz besonders bevorzugt von wenigstens 20%, insbesondere von wenigstens 30% auf.

Unter dem Begriff "Konditionierung" wird im Sinne der vorliegenden Erfindung der reversible Prozess einer Aufnahme von Feuchtigkeit vorzugsweise von Wasser, durch ein Material, vorzugsweise durch ein thermoplastisches Polymer wie ein Homo- oder Copolyamid oder einer entsprechend daraus hergestellten Folie wie der mehrschichtigen Kunststofffolie (1) bis hin zur Gewichtskonstanz verstanden. Die Konditionierung führt üblicherweise zu einer Verbesserung der mechanischen Eigenschaften und wird dafür auch eingesetzt.

Da die vorzugsweise zum Einsatz kommende innenliegende mehrschichtige Kunststofffolie (1) ohne Konditionierung genügend Dehnbarkeit aufweist, wird auch dadurch der Sanierungsprozess verkürzt.

Die Kanalsanierung wird aber nicht nur dadurch beschleunigt, dass die innenliegende Kunststofffolie (1) vorzugsweise nicht konditioniert werden muss, sondern auch durch den speziellen Aufbau der äußeren mehrschichtigen, schlauchförmigen Kunststofffolie (2), gemäß dem die an das reaktive Trägermaterial angrenzende Schicht (e) die von der UV-Quelle im Inneren des Einlegeschlauches ausgestrahlte UV-Strahlung zurück in das auszuhärtende Trägermaterial gleichmäßig reflektiert, wodurch die UV-Strahlungsquelle aufgrund der weitaus höheren Ausnutzung der UV-Strahlung rascher durch das zu sanierende Rohr geführt werden kann.

Das auszuhärtende Trägermaterial ist vorzugsweise ein Glasgewebe aus Glasfasern (Glasfasermaterial), Vliesen und/oder Non-woven-Textilfabrikaten, die jeweils mit wenigstens einem reaktiven Kunststoffharz, vorzugsweise jeweils mit wenigstens einem ungesättigten Polyesterharz, und einem α β-ungesättigten Monomeren wie z.B. Styrol getränkt sind. Solche Glasfasermaterialien sind u.a. als glasfaserverstärkte Kunststoffe (GFK) bekannt.

Zur Herstellung des sanierten Rohres muss das reaktive Kunststoffharz durch Einwirkung der UV-Strahlung ausgehärtet werden, wodurch die notwendige Festigkeit dem Trägermaterial verliehen und ein saniertes Rohr innerhalb des defekten Rohres erhalten wird.

Ein weiterer Gegenstand der vorliegenden Erfindung ist daher auch die Verwendung eines erfindungsgemäßen Einlegeschlauchs zur Sanierung von beschädigten, unterirdischen Rohren oder Kanälen, vorzugsweise Abwasserkanälen, mit Hilfe der Schlauchliner-Technik.

Dazu wird der erfindungsgemäße Einlegeschlauch zur Sanierung eines unterirdischen Rohres, vorzugsweise eines unterirdischen Kanalrohres, in das zu sanierende Rohr eingebracht und auf den Durchmesser des Rohres aufgeblasen. Um das zwischen dem inneren Schlauch und dem äußeren Schlauch des erfindungsgemäßen Einlegeschlauchs befindliche, mit einem reaktiven Kunststoffharz getränkte Trägermaterial auszuhärten, erfolgt eine Bestrahlung mit UV-Strahlung, indem eine Quelle mit UV-Strahlung durch das Innere des aufgeblasenen Einlegeschlauchs durchgezogen wird. Nach erfolgter Aushärtung und dem Ab- bzw. Herausziehen des innenliegenden Schlauches aus der Kunststofffolie (1) verbleibt so das Sanierungsrohr aus dem ausgehärteten Trägermaterial in dem so sanierten Rohr, vorzugsweise einem so sanierten Kanalrohr.

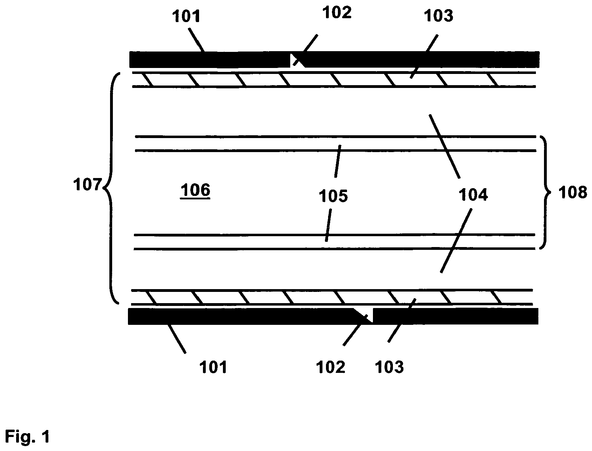

Fig. 1 zeigt beispielhaft einen Längsschnitt durch einen erfindungsgemäßen Einlegeschlauch (107) nach Einlegen in ein Rohr (101), das einen zu sanierenden Bereich (102) aufweist. Der Einlegeschlauch umfasst eine flüssigkeitsdichte, UV-Strahlung und ggf. kurzwelliges, sichtbares Licht absorbierende und/oder reflektierende außenliegende mehrschichtige Schlauchfolie (2) als außenliegenden Schlauch (103) und eine flüssigkeitsdichte, vorzugsweise nicht-konditionierte, mehrschichtige Kunststofffolie (1), vorzugsweise in Form einer Schlauchfolie, als innenliegenden Schlauch (105) und ein dazwischenliegendes, mit einem reaktivem Kunststoffharz getränktes Trägermaterial (104). Nach Aufblasen des Einlegeschlauchs (107) bis auf den Durchmesser des Rohrs (101) weist der Einlegeschlauch (107) einen Hohlraum (106) auf, in den eine UV-Strahlung und ggf. kurzwelliges, sichtbares Licht aussendende, vorzugsweise bewegliche Quelle, vorzugsweise ein UV-Strahler, eingebracht wird, die eine Aushärtung des mit einem reaktivem Kunststoffharz getränkten Trägermaterials (104) bewirkt. Aus diesem getränkten Trägermaterial (104) verbleibt nach der Aushärtung und nach Ab- bzw. Herausziehen des innenliegenden Schlauchs (105) das gebildete sanierte Rohr (108). Die Weite des sanierten Rohres (108) ist in Fig. 1 lediglich aus Gründen der besseren Darstellbarkeit verhältnismäßig gering dargestellt.

### Beispiele

Die nachfolgenden Beispiele und Vergleichsbeispiele dienen der Erläuterung der Erfindung, sind jedoch nicht einschränkend auszulegen.

### I. Chemische Charakterisierung der eingesetzten Rohstoffe:

| | |
|---|---|
| Luvofilm 9679: | LDPE Masterbatch mit Fluorelastomer (Prozesshilfsmittel) |
| Durethan CI 31 F: | Copolyamid der Firma Lanxess, gebildet aus ε-Caprolactam, Hexamethylendiamin und Isophthalsäure |
| Remafin Weiss RCL: | TiO₂ Farbmasterbatch in Polyethylen |
| Remafin Schwarz GE-AE 40% Ruß: | Farbmasterbatch in Polyethylen |
| Durethan B40 FAM: | PA 6 der Firma Lanxess |
| Admer NF 498 E: | mit Maleinsäureanhydridgruppen modifiziertes LDPE der Firma Mitsui (Haftvermittler) |
| Lupolen 2420 F: | LDPE der Firma Basel |
| Euthylenblau 69 Granulat 2025: | Farbmasterbatch in Polyethylen |

### II. Herstellung der Mehrschichtfolien

Die mehrschichtigen Folien des Beispiels 1 und der Vergleichsbeispiele 1 und 2 wurden jeweils unter Verwendung einer 5-Schicht Coextrusion-Blasfolienanlage hergestellt.

### Beispiel 1

**Mehrschichtige Kunststofffolie (2)**

| Schicht | Zusammensetzung | Anteil in Schicht in % | Dicke in µm | |
|---|---|---|---|---|
| (a) | • Luvofilm 9679 | • 0,5 | 55 | |
| | • Dowlex 2740 G | • 20 | | |
| | • Lupolen 2420 F | • 78 | | |
| | • Euthylenblau 69-2025 Granulat | • 1,5 | | |
| (b) | • Haftvermittler Admer NF 518 E | • 94 | 20 | |
| | • Remafin Schwarz 6E-AE 40 % Ruß | • 6 | | |
| (c) | • Durethan B 40 FAM | • 12 | 40 | |
| | • Durethan C 38 F | • 87,5 • | | |
| | • Luvofilm 9679 | 0,5 | | |
| (d) | • Haftvermittler Admer NF 498 E | • 100 | 15 | |
| (e) | • Luvofilm 9679 | • 0,5 | 70 | |
| | • Dowlex 2740 G | • 20 | | |
| | • Lupolen 2420 F | • 59,5 | | |
| | • Remafin Weiss RCL | • 20 | | |

### Vergleichsbeispiel 1

**Mehrschichtige Kunststofffolie (transparent) schwarz/blau**

| Schicht | Zusammensetzung | Anteil in Schicht in % | Dicke in µm | |
|---|---|---|---|---|
| (a) | • Luvofilm 9679 | • 0,5 | 55 | |
| | • Dowlex 2740 G | • 20 | | |
| | • Lupolen 2420 F | • 78 | | |
| | • Euthylenblau 69-2025 Granulat | • 1,5 | | |
| (b) | • Haftvermittler Admer NF 518 E | • 94 | 20 | |
| | • Remafin Schwarz 6E-AE 40 % Ruß | • 6 | | |
| (c) | • Durethan B 40 FAM | • 12 | 40 | |
| | • Durethan C 38 F | • 87,5 | | |
| | • Luvofilm 9679 | • 0,5 | | |
| (d) | • Haftvermittler Admer NF 498 E | • 100 | 15 | |
| (e) | • Luvofilm 9679 | • 0,5 | 70 | |
| | • Dowlex 2740 G | • 20 | | |
| | • Lupolen 2420 F | • 79,5 | | |

### Vergleichsbeispiel 2:

**Mehrschichtige Kunststofffolie transparent, farblos**

| Schicht | Zusammensetzung | Anteil in Schicht in % | Dicke in µm | |
|---|---|---|---|---|
| (a) | • Luvofilm 9679 | • 0,5 | 55 | |
| | • Dowlex 2740 G | • 20 | | |
| | • Lupolen 2420 F | • 79,5 | | |
| (b) | • Haftvermittler Admer NF 498 E | • 100 | 20 | |
| (c) | • Durethan B 40 FAM | • 12 | 40 | |
| | • Durethan C 38 F | • 87,5 | | |
| | • Luvofilm 9679 | • 0,5 | | |
| (d) | • Haftvermittler Admer NF 498 E | • 100 | 15 | |
| (e) | • Luvofilm 9679 | • 0,5 | 70 | |
| | • Dowlex 2740 G | • 20 | | |
| | • Lupolen 2420 F | • 79,5 | | |

Von der mehrschichtigen Kunststofffolie gemäß Beispiel 1 und gemäß den Vergleichsbeispielen 1 und 2, die jeweils nach denselben Bedingungen durch Coextrusion hergestellt wurden, wurde die UV-Reflektion einer Probe der Folie mit dem Gerät Shimadzu UV-3600 Series unter Verwendung des 3-Detektor-Modells ISR-3100 bei einem Winkel von 8° gemessen und ergab bei einer Wellenlänge von 400 µm die nachstehend angegebenen Reflektionswerte.

| Bezeichnung | Reflektion in % (400 nm) |
|---|---|
| V1 | 4,5 |
| V2 | 4,5 |
| B1 | 42,0 |

Die erfindungsgemäße Mehrschichtfolie gemäß Bsp. 1 zeigt ein deutlich höheres Reflexionsvermögen bei einer Wellenlänge von 400 nm im Vergleich zu den Mehrschichtfolien gemäß Vergleichsbeispiel 1 bzw. 2, wodurch eine schnellere und homogenere Aushärtung des mit reaktivem Harzsystem getränkten Trägermaterials zu erreichen ist.

## Patentansprüche

1. Ein Einlegeschlauch geeignet zum Auskleiden von unterirdischen Rohren und Kanälen, vorzugsweise unterirdischen Abwasserkanälen, der aus einer schlauchförmigen, innenliegenden, ein- oder mehrschichtigen, flüssigkeitsdichten und zur Aushärtung des Trägermaterials zumindest 80% der UV-Strahlung im Wellenlängenbereich von 200-400 nm durchlassenden Kunststofffolie (1) und einer außenliegenden, schlauchförmigen, mehrschichtigen Kunststofffolie (2) und einer zwischen den beiden schlauchförmigen Kunststofffolien angeordneten, mit einem reaktiven Kunststoffharz getränkten, ein- oder mehrschichtigen Trägermaterial besteht, wobei die außenliegende, schlauchförmige Kunststofffolie (2) aus einer undurchsichtigen Schichtfolge aus
(a) ggf. einer gefärbten Schicht (a) basierend auf wenigstens einem thermoplastischen Olefin-Homo- oder Copolymeren als äußerste Schicht eines Einlegeschlauchs,
(b) einer undurchsichtigen Schicht (b) basierend auf einem thermoplastischen ggf. modifizierten Olefin-Homo- oder Copolymeren und weiterhin wenigstens eine organische und/oder anorganische Substanz derart enthaltend, dass die Schicht (b) die von außen einwirkende UV-Strahlung im Wellenlängenbereich von 200-400 nm und das von außen einwirkende, kurzwellige, sichtbare Licht im Wellenlängenbereich von 400-500 nm, vorzugsweise von 400-450 nm, zu mehr als 90% absorbiert,
(c) einer innenliegenden Barriereschicht (c) gegen Sauerstoff, Wasserdampf oder Öl,
(d) einer Schicht (d) basierend auf einem ggf. modifizierten thermoplastischen Olefin-Homo- oder Copolymeren als ggf. Haftvermittlerschicht,
(e) einer Schicht (e) basierend auf wenigstens einem thermoplastischen Olefin-Homo- oder Copolymeren und weiterhin wenigstens eine Substanz derart enthaltend, dass die Schicht (e) die UV-Strahlung im Wellenlängenbereich von 200-400 nm zu wenigstens 40% reflektiert, wobei die Substanz vorzugsweise ausgewählt ist aus der Gruppe bestehend aus organischen Verbindungen, anorganischen Verbindungen, Metallen, Metalllegierungen, Metallverbindungen, Mischungen von wenigstens zwei der genannten Verbindungen, Mischungen von wenigstens einer der genannten Verbindungen und einem Metall, und wobei die Schicht (e) eine direkt an das getränkte, durch UV-Strahlung aushärtbare Trägermaterial anschließende Schicht ist,
besteht, wobei die Kunststofffolie (2) weder eine Metallbeschichtung aufweist noch aus einer Metallfolie besteht.

2. Ein Einlegeschlauch nach Anspruch 1, **dadurch gekennzeichnet, dass** zumindest die Schicht (e) der mehrschichtigen Kunststofffolie (2), die die UV-Strahlung reflektierende Substanz enthält, eine reflektierende Struktur, vorzugsweise auf der dem Trägermaterial direkt zugewandten Oberfläche und vorzugsweise eine Prismen- Facetten-, Waben-, Pyramiden-Struktur aufweist.

3. Ein Einlegeschlauch nach Anspruch 1 oder 2, **dadurch gekennzeichnet, dass** die in der Schicht (e) enthaltene die UV-Strahlung reflektierende Substanz die UV-Strahlung in einem Wellenlängenbereich von 200 - 400 nm zu wenigstens 50 % reflektiert.

4. Ein Einlegeschlauch nach einem der Ansprüche 1 - 3, **dadurch gekennzeichnet, dass** die in der Schicht (e) enthaltene die UV-Strahlung reflektierende Substanz eine durchschnittliche Partikelgröße von 0,08 µm - 5000 µm, vorzugsweise von 0,1 µm - 2000 µm, gemessen mit Hilfe der Streulichtintensität, vorzugsweise mit Hilfe von Laserstrahlen, aufweist.

5. Ein Einlegeschlauch nach einem der Ansprüche 1 - 4, **dadurch gekennzeichnet, dass** als eine die UV-Strahlung reflektierende, anorganische Verbindung wenigstens ein anorganisches Weißpigment, vorzugsweise TiO₂, Zinksulfid, Calciumcarbonat, Aluminiumoxid, Bariumsulfat, Silberchlorid oder ein weiteres entsprechendes, UV-Strahlung reflektierendes, anorganisches Salz oder ein organisches Weißpigment in der Schicht (e) vorliegt.

6. Ein Einlegeschlauch nach einem der Ansprüche 1 - 4, **dadurch gekennzeichnet, dass** als UV-Strahlung reflektierendes Metall oder Metalllegierung wenigstens ein Metall in multipartikulärer Form, vorzugsweise Kupfer, Zink und/oder Zinn und/oder eine Metalllegierung in multipartikulärer Form, vorzugsweise eine Cu/Zn- oder Cu/Sn-Legierung, in der Schicht (e) enthalten ist.

7. Ein Einlegeschlauch nach einem der Ansprüche 1 - 4, **dadurch gekennzeichnet, dass** die in der Schicht (e) enthaltene, als eine die UV-Strahlung reflektierende Substanz wenigstens eine Metallverbindung in multipartikulärer Form ausgewählt aus der Gruppe umfassend Metalloxide, Übergangsmetalloxide, Metalloxidhydrate und Übergangsmetalloxidhydrate ist.

8. Ein Einlegeschlauch nach einem der Ansprüche 1 - 7, **dadurch gekennzeichnet, dass** die Schicht (e) 5 - 40 Gew.-%, vorzugsweise 10 - 25 Gew.-%, bezogen auf das Gesamtgewicht der Schicht (e), wenigstens einer, die UV-Strahlung reflektierende Substanz enthält.

9. Ein Einlegeschlauch nach einem der Ansprüche 1 - 8, **dadurch gekennzeichnet, dass** die Schichten (a), (b), (d) bzw. (e), gleich oder verschieden, auf wenigstens einem ggf. modifizierten, thermoplastischen Olefin-Homo- oder Copolymeren, vorzugsweise auf wenigstens einem ggf. modifizierten thermoplastischen Ethylen-Homo- oder Copolymeren und/oder wenigstens einem ggf. modifizierten Propylen-Homo- oder Copolymeren basieren.

10. Ein Einlegeschlauch nach einem der Ansprüche 1 - 9, **dadurch gekennzeichnet, dass** die Schicht (b) der mehrschichtigen Kunststofffolie (2) als wenigstens eine die von außen einwirkende UV-Strahlung und ggf. kurzwelliges Licht absorbierende und/oder reflektierende Substanz wenigstens₋ein Metalloxid, Übergangsmetalloxid, Metalloxidhydrat, Übergangsmetalloxidhydrat, sterisch gehindertes Amin, Benzotriazolderivat, Benzimidazol-Derivat, Benzophenon, Cyanoacrylat, ein MetallPigment, ein Mineral-Pigment und/oder Kohlenstoff-Pigment in multipartikulärer Form enthält.

11. Ein Einlegeschlauch nach einem der Ansprüche 1 - 9, **dadurch gekennzeichnet, dass** die reflektierende Schicht (b) der mehrschichtigen Kunststofffolie (2) als UV-Strahlung absorbierende, undurchsichtige Substanz eine anorganische Verbindung, vorzugsweise ein dunkelfarbiges, undurchsichtiges Farbpigment, insbesondere Eisenoxid, Kupferoxid und/oder Ruß, enthält.

12. Ein Einlegeschlauch nach einem der Ansprüche 1 - 11, **dadurch gekennzeichnet, dass** die innenliegende, für UV-Strahlung durchlässige, schlauchförmige Kunststofffolie (1) mehrschichtig ist.

13. Ein Einlegeschlauch nach einem der Ansprüche 1 - 12, **dadurch gekennzeichnet, dass** die innenliegende, schlauchförmige Kunststofffolie (1) eine Schicht (A) basierend auf wenigstens einem Olefin-Homo-Polymeren, wenigstens einem Olefin-Copolymeren oder einer Mischung von wenigstens zwei der genannten Polymeren oder wenigstens ein Homopolyamid und/oder Copolyamid aufweist, die an das getränkte Trägermaterial direkt angrenzt, ggf. eine ggf. jeweils über Haftvermittlerschichten (B) bzw. (D) verbundene Barriereschicht (C) und eine außenliegende Schicht (E) basierend auf wenigstens einem Olefin-Homo-oder Copolymeren oder wenigstens einem Homo- und/oder CoPolyamid als die zum Innenraum des Einlegeschlauches gerichtete Außenschicht aufweist.

14. Ein Einlegeschlauch nach einem der Ansprüche 1 - 13, **dadurch gekennzeichnet, dass** die Schicht (A) der innenliegenden schlauchförmigen Mehrschichtfolie auf wenigstens einem Ethylen-Homo- oder Copolymeren und/oder wenigstens einem Propylen-Homo- oder Copolymeren oder einer entsprechenden Mischung der Homopolymeren oder auf einem PA6, PA6,6, PA6T und/oder PA6I basiert.

15. Ein Einlegeschlauch nach einem der Ansprüche 1 - 14, **dadurch gekennzeichnet, dass** sowohl die Barriereschicht (c) der außenliegenden, schlauchförmigen Kunststofffolie (2) als auch als Barriereschicht (C) der innenliegenden, schlauchförmigen Kunststofffolie (1) auf wenigstens einem Homo- und/oder Copolyamid basiert.

16. Ein Einlegeschlauch nach einem der Ansprüche 1 - 15, **dadurch gekennzeichnet, dass** die Schicht (E) und die Barriereschicht (C) der innenliegenden Kunststofffolie (1) einen identischen Schichtaufbau, vorzugsweise eine identische Schichtdicke und/oder identische Polyamidkomponenten und/oder eine identische Zusammensetzung, aufweisen.

17. Ein Einlegeschlauch nach einem der Ansprüche 1 - 16, **dadurch gekennzeichnet, dass** als ggf. mehrschichtige, zwischen den beiden schlauchförmigen Kunststofffolien (1) und (2) angeordnetes Trägermaterial ein vorzugsweise schlauchförmig durch UV-Strahlung aushärtbares Trägermaterial aus anorganischen und/oder zumindest teilweise organischen Faser, vorzugsweise umfassend Vlies- oder Filzlagen, vorliegt, wobei das mit UV-Strahlung aushärtbare Trägermaterial mit einem vorzugsweise ungesättigten Harzsystem aus vorzugsweise ungesättigten Polyestern und aus α-β-ungesättigten Monomeren, vorzugsweise Styrol, getränkt ist.

18. Verwendung eines Einlegeschlauchs nach einem der Ansprüche 1 - 17, zur Sanierung von beschädigten, unterirdischen Rohren, vorzugsweise Kanälen, besonders bevorzugt Abwasserkanälen, mit Hilfe der Schlauchliner-Technik.

19. Verwendung nach Anspruch 18, **dadurch gekennzeichnet, dass** ein Einlegeschlauch nach einem der Ansprüche 1 - 17, in das zu sanierende Rohr oder den zu sanierenden Kanal eingebracht wird, der Einlegeschlauch auf das Volumen des Rohres oder Kanales ausgeweitet, vorzugsweise aufgeblasen, wird, und anschließend mit Hilfe einer UV-Strahlung abgebenden, in Längsrichtung des Einlegeschlauchs bzw. des Kanalrohres bewegbaren Vorrichtung das imprägnierte Trägermaterial des Einlegeschlauches durch die UV-Strahlung ausgehärtet und nach der Aushärtung die innenliegende, schlauchförmige Kunststofffolie (1) entfernt wird.

## Claims

1. A liner tube suitable for lining underground pipes and drains, preferably underground wastewater drains, made of a tube-shaped, inner, single or multi-layer, liquid-tight plastic film (1) letting at least 80% of UV radiation in the wavelength range from 200-400 nm pass through for curing the substrate material, and of an outer, tube-shaped, multi-layer plastic film (2), and of a single or multi-layer substrate disposed between the two tube-shaped plastic films and impregnated with a reactive plastic resin, the outer tube-shaped plastic film (2) being made of an opaque sequence of layers of
(a) optionally a colored layer (a) based on at least one thermoplastic olefin homopolymer or copolymer as the outermost layer of a liner tube,
(b) an opaque layer (b) based on a thermoplastic, optionally modified olefin homopolymer or copolymer and further comprising at least one organic and/or inorganic substance, such that the layer (b) absorbs more than 90% of UV radiation in the wavelength range from 200-400 nm acting from the outside and of short-wavelength, visible light in the wavelength range from 400-500 nm, preferably from 400-450 nm, acting from the outside,
(c) an inner barrier layer (c) against oxygen, water vapor, or oil,
(d) a layer (d) based on an optionally modified thermoplastic olefin homopolymer or copolymer as an optional bonding agent layer,
(e) a layer (e) based on at least one thermoplastic olefin homopolymer or copolymer and further comprising at least one substance such that the layer (e) reflects at least 40% of UV radiation in the wavelength range from 200-400 nm, the substance preferably being selected from the group of organic compounds, inorganic compounds, metals, metal alloys, metal compounds, mixtures of two or more of said compounds, mixtures of at least one of said compounds and one metal, and the layer (e) being a layer directly adjacent to the impregnated UV-curable substrate material,
and the plastic film (2) neither comprising a metal coating nor being made of a metal foil.

2. A liner tube according to claim 1, **characterized in that** at least the layer (e) of the multilayer plastic film (2), comprising the substance reflecting UV radiation, has a reflecting structure, preferably on the surface facing directly toward the substrate and preferably comprising a prismatic, faceted, honeycomb, pyramid structure.

3. A liner tube according to claim 1 or 2, **characterized in that** the substance present in the layer (e) and reflecting UV radiation reflects at least 50% of UV radiation in a wavelength range from 200-400 nm.

4. A liner tube according to any one of the claims 1-3, **characterized in that** the substance present in layer (e) and reflecting UV radiation comprises a mean particle size of 0.08 µm-5000 µm, preferably 0.1 µm-2000 µm, measured by means of the intensity of scattered light, preferably by means of laser beams.

5. A liner tube according to any one of the claims 1-4, **characterized in that** at least one inorganic white pigment, preferably TiO₂, zinc sulfide, calcium carbonate, aluminum oxide, barium sulfate, silver chloride, or another respective UV radiation reflecting inorganic salt or an organic white pigment is present in the layer (e) as the inorganic compound reflecting UV radiation.

6. A liner tube according to any one of the claims 1-4, **characterized in that** at least one metal in multiparticulate form, preferably copper, zinc, and/or tin, and/or a metal alloy in multiparticulate form, preferably a Cu/Zn or Cu/Sn alloy, is present in the layer (e) as the metal or metal alloy reflecting UV radiation.

7. A liner tube according to any one of the claims 1-4, **characterized in that** the at least one metal compound present in the layer (e) as a substance reflecting UV radiation is selected in multiparticulate form from the group comprising metal oxides, transition metal oxides, metal oxide hydrates, and transition metal oxide hydrates.

8. A liner tube according to any one of the claims 1-7, **characterized in that** the layer (e) comprises 5-40 % by weight, preferably 10-25 % by weight, relative to the total weight of the layer (e), of at least one substance reflecting UV radiation.

9. A liner tube according to any one of the claims 1-8, **characterized in that** the layers (a), (b), (d), and (e), identically or differently, are based on at least one optionally modified thermoplastic olefin homopolymer or copolymer, preferably on at least one optionally modified thermoplastic ethylene homopolymer or copolymer, and/or at least one optionally modified propylene homopolymer or copolymer.

10. A liner tube according to any one of the claims 1-9, **characterized in that** the layer (b) of the multilayer plastic film (2) comprises at least one metal oxide, transition metal oxide, metal oxide hydrate, transition metal hydrate, steric hindered amine, benzotriazol derivative, benzimidazol derivative, benzophenone, cyanoacrylate, a metal pigment, a mineral pigment, and/or carbon pigment in multiparticulate form as at least one substance absorbing and/or reflecting the UV radiation and optionally short-wavelength light acting from outside.

11. A liner tube according to any one of the claims 1-9, **characterized in that** the reflecting layer (b) of the multilayer plastic film (2) comprises an inorganic compound, preferably a dark-colored, opaque color pigment, particularly iron oxide, copper oxide, and/or soot as an opaque substance absorbing UV radiation.

12. A liner tube according to any one of the claims 1-11, **characterized in that** the inner tube-shaped plastic film (1) transparent to UV radiation is multi-layered.

13. A liner tube according to any one of the claims 1-12, **characterized in that** the inner tube-shaped plastic film (1) comprises a layer (A) based on at least one olefin homopolymer, at least one olefin copolymer, or a mixture of at least two of said polymers or at least one homopolyamide and/or copolyamide, directly adjacent to the impregnated substrate, optionally a barrier layer (C) optionally bonded by means of bonding agent layers (B) and (D), and an outer layer (E) based on at least one olefin homopolymer or copolymer or at least one homopolyamide and/or copolyamide as the outer layer of the insert tube facing toward the interior.

14. A liner tube according to any one of the claims 1-13, **characterized in that** the layer (A) of the inner tube-shaped multilayer film is based on at least one ethylene homopolymer or copolymer and/or at least one propylene homopolymer or copolymer or a corresponding mixture of the homopolymers, or on a PA6, PA6,6, PA6T, and/or PA6I.

15. A liner tube according to any one of the claims 1-14, **characterized in that** both the barrier layer (c) of the outer tube-shaped plastic film (2) and the barrier layer (C) of the inner tube-shaped plastic film (1) are based on at least one homopolyamide and/or copolyamide.

16. A liner tube according to any one of the claims 1-15, **characterized in that** the layer (E) and the barrier layer (C) of the inner plastic film (1) have an identical layer construction, preferably an identical layer thickness and/or identical polyamide components and/or an identical composition.

17. A liner tube according to any one of the claims 1-16, **characterized in that** a preferably tube-shaped substrate curable by UV radiation and made of inorganic and/or at least partially organic fibers, preferably comprising nonwoven or felt layers, is present as the optionally multilayer substrate disposed between the two tube-shaped plastic films (1) and (2), wherein the substrate curable by UV radiation is impregnated with a preferably unsaturated resin system made of preferably unsaturated polyesters and of α-β unsaturated monomers, preferably styrol.

18. The use of a liner tube according to any one of the claims 1-17 for repairing damaged underground pipes, preferably drains, particularly preferably wastewater drains, using the tube liner technique.

19. The use according to claim 18, **characterized in that** a liner tube according to any one of the claims 1-17 is inserted into the pipe to be repaired or the drain to be repaired, the liner tube is spread out over the volume of the pipe or drain, preferably inflated, and then the impregnated substrate of the liner tube is cured by the UV radiation by means of a device emitting UV radiation and displaceable in the longitudinal direction of the liner tube or the pipeline, and the inner tube-shaped plastic film (1) is removed after curing.

## Revendications

1. Tuyau de chemisage approprié pour le chemisage de tubes et de canalisations souterrains, de préférence canalisations d'eaux usées, qui se compose d'une feuille en matière plastique (1) de forme tubulaire, intérieure, à une ou plusieurs couches, étanche aux liquides et, pour le durcissement du substrat, laissant passer au moins 80% du rayonnement ultraviolet dans la gamme de longueur d'onde de 200 - 400 nm, d'une feuille en matière plastique (2) extérieure, de forme tubulaire, à plusieurs couches et d'un substrat disposé entre les deux feuilles en matière plastique de forme tubulaire, imprégné d'une résine synthétique réactive, à une ou plusieurs couches, dans lequel la feuille (2) en matière plastique extérieure se compose d'une succession de couches opaque en,
(a) le cas échéant, une couche teinte (a) basée sur au moins un homopolymère ou un copolymère d'oléfine thermoplastique en tant que couche extérieure d'un tuyau de chemisage,
(b) une couche opaque (b) basée sur un homopolymère ou un copolymère d'oléfine thermoplastique, le cas échéant, modifié, et contenant en outre au moins une substance organique et/ou inorganique de sorte que la couche (b) absorbe le rayonnement ultraviolet agissant de l'extérieur dans la gamme de longueurs d'ondes de 200 - 400 nm et la lumière visible de courte longueur d'ondes agissant de l'extérieur dans la gamme de longueurs d'ondes de 400 - 500 nm, de préférence de 400 - 450 nm, à plus de 90%,
(c) une couche barrière (c) intérieure contre l'oxygène, la vapeur d'eau et l'huile,
(d) une couche (d) basée sur un homopolymère ou un copolymère d'oléfine thermoplastique, le cas échéant modifié, en tant que couche d'accrochage,
(e) une couche (e) basée sur au moins un homopolymère ou un copolymère d'oléfine thermoplastique et contenant en outre au moins une substance de sorte que la couche (e) réfléchisse le rayonnement ultraviolet dans la gamme de longueurs d'ondes de 200 - 400 nm à au moins 40%, sachant que la substance est de préférence sélectionnée dans le groupe composé de composés organiques, de composés inorganiques, de métaux, d'alliages de métaux, de composés métalliques, de mélanges d'au moins deux des composés cités, de mélanges d'au moins un des composés cités et d'un métal, et sachant que la couche (e) est couche directement mitoyenne au substrat imprégné durcissable par le rayonnement ultraviolet,
sachant que la feuille en matière plastique (2) ne comporte pas de revêtement métallique et ne se compose pas d'une feuille métallique.

2. Tuyau de chemisage selon la revendication 1, **caractérisé en ce qu'**au moins la couche (e) de la feuille en matière plastique (2) à plusieurs couche, qui contient la substance réfléchissant le rayonnement ultraviolet, présente une structure réfléchissante, de préférence sur la surface faisant directement face au substrat et de préférence une structure à prismes, à facettes, à alvéoles ou à pyramides.

3. Tuyau de chemisage selon la revendication 1 ou 2, **caractérisé en ce que** la substance réfléchissant le rayonnement ultraviolet contenue dans la couche (e) réfléchit le rayonnement ultraviolet dans la gamme de longueurs d'ondes de 200 - 400 nm à au moins 50 %.

4. Tuyau de chemisage selon l'une des revendications 1 - 3, **caractérisé en ce que** la substance réfléchissant le rayonnement ultraviolet contenue dans la couche (e) présente une dimension de particule moyenne de 0,08 µm - 5000 µm, de préférence de 0,1 µm - 2000 µm, mesurée à l'aide de l'intensité de la lumière diffusée, de préférence de faisceaux laser.

5. Tuyau de chemisage selon l'une des revendications 1 - 4, **caractérisé en ce que**, en tant que composé inorganique réfléchissant le rayonnement ultraviolet, au moins un pigment blanc inorganique, de préférence du TiO₂, du sulfure de zinc, du carbonate de calcium, de l'oxyde d'aluminium, du sulfate de baryum, du chlorure d'argent ou un autre sel inorganique correspondant réfléchissant le rayonnement ultraviolet ou un pigment blanc organique, est présent dans la couche (e).

6. Tuyau de chemisage selon l'une des revendications 1 - 4, **caractérisé en ce que**, en tant que métal ou alliage de métaux réfléchissant le rayonnement ultraviolet, au moins un métal sous forme multiparticulaire, de préférence du cuivre, du zinc et/ou de l'étain et/ou un alliage de métaux sous forme multiparticulaire, de préférence un alliage Cu/Zn ou un alliage Cu/Sn, est contenu dans la couche (e).

7. Tuyau de chemisage selon l'une des revendications 1 - 4, **caractérisé en ce que** la substance contenue dans la couche (e) en tant que substance réfléchissant le rayonnement ultraviolet est au moins un composé métallique sous forme multiparticulaire sélectionné dans le groupe comprenant des oxydes métalliques, des oxydes métalliques de transition, des hydrates d'oxydes métalliques et des hydrates d'oxydes métalliques de transition.

8. Tuyau de chemisage selon l'une des revendications 1 - 7, **caractérisé en ce que** la couche (e) contient 5 - 40 pour cent en poids, de préférence 10 - 25 pour cent en poids par rapport au poids total de la couche (e), d'au moins une substance réfléchissant le rayonnement ultraviolet.

9. Tuyau de chemisage selon l'une des revendications 1 - 8, **caractérisé en ce que** les couches (a), (b), (d) ou (e), identiques ou différentes, sont basées sur au moins un homopolymère ou un copolymère d'oléfine thermoplastique, le cas échéant modifié, de préférence sur au moins un homopolymère ou un copolymère d'éthylène thermoplastique, le cas échéant modifié, et/ou au moins un homopolymère ou un copolymère de propylène, le cas échéant modifié.

10. Tuyau de chemisage selon l'une des revendications 1 - 9, **caractérisé en ce que** la couche (b) de la feuille en matière plastique (2) à plusieurs couches contient en tant qu'au moins une substance absorbant et/ou réfléchissant le rayonnement ultraviolet agissant de l'extérieur et, le cas échéant, absorbant et/ou réfléchissant la lumière de courte longueur d'ondes, au moins un oxyde métallique, un oxyde métallique de transition, un hydrate d'oxyde métallique, un hydrate d'oxyde métallique de transition, une amine à encombrement stérique, un dérivé de benzotriazole, un dérivé de benzimidazole, de la benzophénone, du cyanoacrylate, un pigment métallique, un pigment minéral et/ou un pigment de carbone sous forme multiparticulaire.

11. Tuyau de chemisage selon l'une des revendications 1 - 9, **caractérisé en ce que** la couche réfléchissante (b) de la feuille en matière plastique (2) à plusieurs couches contient en tant que substance opaque absorbant le rayonnement ultraviolet un composé inorganique, de préférence un pigment colorant opaque de couleur sombre, en particulier de l'oxyde de fer, de l'oxyde de cuivre et/ou du noir de carbone.

12. Tuyau de chemisage selon l'une des revendications 1 - 11, **caractérisé en ce que** la feuille en matière plastique (1) intérieure tubulaire, perméable au rayonnement ultraviolet, est à plusieurs couches.

13. Tuyau de chemisage selon l'une des revendications 1 - 12, **caractérisé en ce que** la feuille en matière plastique (1) intérieure de forme tubulaire comporte une couche (A) basée sur au moins un homopolymère d'oléfine, au moins un copolymère d'oléfine ou un mélange d'au moins deux des polymères cités ou au moins un homopolyamide et/ou un copolyamide, qui est directement mitoyenne au substrat imprégné, le cas échéant, une couche barrière (C) reliée le cas échéant via des couches d'accrochage (B) ou (D) et une couche (E) extérieure basée sur au moins un homopolymère ou copolymère d'oléfine ou au moins un homopolyamide et/ou copolyamide, en tant que la couche extérieure dirigée vers l'intérieur du tuyau de chemisage.

14. Tuyau de chemisage selon l'une des revendications 1 - 13, **caractérisé en ce que** la couche (A) de la feuille intérieure à plusieurs couches de forme tubulaire est basée sur au moins un homopolymère ou un copolymère d'éthylène et/ou au moins un homopolymère ou un copolymère de propylène ou un mélange correspondant des homopolymères ou sur un PA6, PA6,6, PA6T et/ou PA6I.

15. Tuyau de chemisage selon l'une des revendications 1 - 14, **caractérisé en ce que** tant la couche barrière (c) de la feuille (2) en matière plastique extérieure de forme tubulaire que la couche barrière (C) de la feuille (1) en matière plastique intérieure de forme tubulaire sont basées sur un homopolyamide et/ou copolyamide.

16. Tuyau de chemisage selon l'une des revendications 1 - 15, **caractérisé en ce que** la couche (E) et la couche barrière (C) de la feuille (1) en matière plastique intérieure présentent une structure de couches identique, de préférence une épaisseur de couche identique et/ou des composants polyamides identiques et/ou une composition identique.

17. Tuyau de chemisage selon l'une des revendications 1 - 16, **caractérisé en ce que**, en tant que substrat, le cas échéant à plusieurs couches, disposé entre les deux feuilles en matière plastique (1) et (2) de forme tubulaire, il existe un substrat de préférence durcissable sous forme tubulaire par le rayonnement ultraviolet, en fibres inorganiques et/ou au moins partiellement organiques, comprenant de préférence des couches de non-tissé ou de feutre, sachant que le substrat durcissable par le rayonnement ultraviolet est imprégné d'un système de résine de préférence non saturée composée de polyesters de préférence non saturés et de monomères non saturés α-β, de préférence styrène.

18. Utilisation d'un tuyau de chemisage selon l'une des revendications 1 - 17 pour la réhabilitation de tubes souterrains endommagés, de préférence de canalisations, de manière particulièrement préférée de canalisations d'eaux usées, à l'aide de la technique de chemisage des tuyaux.

19. Utilisation selon la revendication 18, **caractérisée en ce qu'**un tuyau de chemisage selon l'une des revendications 1 - 17 est introduit dans le tube ou dans la canalisation devant être réhabilité, le tube de chemisage est élargi, de préférence gonflé, au volume du tube ou de la canalisation puis, à l'aide d'un dispositif livrant un rayonnement ultraviolet et déplaçable dans le sens longitudinal du tuyau de chemisage ou du conduit, le substrat imprégné du tuyau de chemisage est durci par le rayonnement ultraviolet et, après le durcissement, la feuille en matière plastique (1) intérieure de forme tubulaire est enlevée.
